# EUROPEAN PATENT SPECIFICATION

(11) **EP 4 667 361 B1**
(45) Date of publication and mention of the grant of the patent: **11.11.2026**
(21) Application number: 24382660.9
(22) Date of filing: 19.06.2024
(51) Int. Cl.: B64D 37/04, B64C 1/06, B64C 1/14, B64D 37/30

(54) **AIRCRAFT FUSELAGE SECTION COMPRISING A FUEL TANK**
FLUGZEUGRUMPFABSCHNITT MIT EINEM KRAFTSTOFFTANK
SECTION DE FUSELAGE D'AÉRONEF COMPRENANT UN RÉSERVOIR DE CARBURANT

(43) Date of publication of application: 24.12.2025
(73) Proprietor: AIRBUS OPERATIONS, S.L.U., 28906 Getafe, Madrid (ES)
(72) Inventor: BALLESTERO MÉNDEZ, Jorge, 28906 Getafe (ES); FERNÁNDEZ RAMÍREZ, Ana, 28906 Getafe (ES)
(74) Representative: Elzaburu S.L.P.

(56) References cited:
- EP-A1- 4 450 400
- CN-A- 117 262 195
- US-A1- 2010 316 928
- US-A1- 2012 068 008
- US-A1- 2023 356 856
- US-A1- 20240 150 032

## Description

### Field of the invention

The present invention relates to an aircraft fuselage section comprising a fuel tank and belongs to the technical field of the installation and removal of fuel storage tanks in/from the aircraft structure. The invention also refers to a method for extracting a fuel tank from an aircraft fuselage section.

### Background of the invention

Due to environmental reasons, challenges to reduce the use of fossil fuels must be increasingly faced. In this scenario, hydrogen produced on the basis of renewable energy is a reasonable candidate for efficient energy supply. Its high energy density makes it an emerging alternative fuel for aircraft applications.

In particular, hydrogen (H2) is an attractive fuel for high-altitude short-medium range aircraft because it contains about 3 times the energy per kilogram as compared with traditional hydrocarbon fuels. Therefore, in aircraft applications, said high specific energy of hydrogen may be a key enabler. However, practical considerations have largely prevented its use. While the specific energy of hydrogen is very high, the energy per volume unit is comparatively low. Liquid hydrogen (LH2) enhances its energy density relative to gaseous form, while allowing to reduce the mass of the tank required to confine the hydrogen within as a result of the lower pressure in liquid state.

In this regard, LH2 cryotanks (i.e., tanks configured for housing liquid hydrogen and for maintaining the necessary conditions for maintaining hydrogen in the liquid state) are one of the key components of the structure of future generations of heavy lift launch vehicles, space exploration structures and H2 fueled aircrafts.

One of the challenges in developing hydrogen storage systems in aircraft industry is the need to accommodate within aircraft fuel storage tanks and associated equipment for fuel conditioning and distribution, while allowing access thereto for maintenance operations. In some cases, fuel tanks need to be completely removed from the interior of the aircraft for inspection and maintenance operations outside the aircraft, so removable panels need to be arranged to permit the extraction of the fuel tanks out of the aircraft.

Traditionally the space industry has used liquid hydrogen as fuel for space missions. The use of cryotanks for these missions has led to some very interesting conclusions. For instance, vertical loads due to take-off accelerations are the main loads to be withstood by the cryotank attachments in aerospace application. In the case of civil aircraft applications, the main loads would be vertical loads, due to crash landing events, and horizontal loads due to also crash landing events or emergency considerations according to CS25.

The key design drivers of LH2 cryotank fuel tanks are:
- Shape: linked to the most efficient way to carry more fuel weight (gravimetric index) and support the associated pressure loads. Spherical and cylindrical shapes are usually considered.
- Volume: linked to the range of the aircraft mission and the aircraft dimensions.
- Insulation: linked to keep the hydrogen in liquid state to reduce its transformation to gas and prevent permeability issues.
- Permeability: due to the cryogenic temperatures range to keep hydrogen in liquid state, materials experience a cold embrittlement leading to micro-cracking phenomena through which the small size gas hydrogen (GH2) molecules can penetrate and generate leaks.

US 2010/316928 A1 discloses a fuel cell system module for use in an aircraft which can be detached from the fuselage section of the aircraft and replaced by another fuel cell system module.

US 2023/0356856 A1 discloses modular hydrogen-fuel storage assemblies with an external form factor corresponding to Unit Load Device (ULD) cargo containers, allowing the assemblies to be easily loaded into and stored in a cargo bay area of an aircraft. Each assembly can house one or more hydrogen fuel tanks containing liquid and gaseous hydrogen, which can be used to power an APU or other power system of the aircraft. Each assembly can include an internal cradle system for securing the tanks within the assembly, a ground servicing panel for refuelling, a quick connection assembly for quickly coupling the assembly to the APU or other power system, a cold box for managing various fluid flow, and an avionics bay for controlling the various components of the assembly.

Thus, there is a need is to provide an aircraft section comprising a fuel tank, such as a liquid hydrogen cryotank, that allows its installation and removal in/from the aircraft structure in a more efficient way in terms of Airframe Structure weight, Industrial Assembly accessibility, together with Maintenance, Repair and Operability capability.

### Summary of the invention

It is an object of the invention to provide an aircraft fuselage section comprising a fuel tank that overcomes the mentioned drawbacks.

The invention provides an aircraft fuselage section comprising a fuel tank, the aircraft fuselage section further comprising a top removable structural panel, wherein:
- the fuel tank is attached to the top removable structural panel by means of attachment joints attached to the panel at internal anchor points,
- the top removable structural panel comprises external anchor points placed in the areas of the panel where the internal anchor points are located, the external anchor points being configured to be connected to external hoisting means, and
- the structural continuity between the top removable structural panel and the rest of the aircraft fuselage section is achieved through frame joints, the frame joints being suitable for disconnecting frame portions of the top removable structural panel from frames of the rest of the aircraft fuselage section.

This configuration of the aircraft fuselage section of the invention allows the fuel tank to be removed from the top of the aircraft by means of lifting or hoisting means such as a standard crane in a more efficient way.

The invention also provides a method for extracting a fuel tank from an aircraft fuselage section, the method comprising the following steps:
- the external anchor points are connected to external hoisting means,
- the frame joints are disconnected, separating the top removable structural panel from the rest of the aircraft fuselage section, and
- the external hoisting means raise the top removable structural panel with the fuel tank out of the rest of the aircraft fuselage section.

The invention also provides a method for extracting a fuel tank from an aircraft fuselage section, the method comprising the following steps:
- the external anchor points are connected to external hoisting means,
- the frame joints are disconnected, separating the top removable structural panel from the rest of the aircraft fuselage section,
- the hydrogen systems and non-hydrogen systems in the top fairing are disconnected, and
- the external hoisting means raise the top removable structural panel with the fuel tank out of the rest of the aircraft fuselage section.

The invention provides the following advantages:
- It reduces the number of access holes to previously disconnect the fuel tank attachments from the portion of the unpressurized rear fuselage to be removed to install and/or remove the fuel tank. By doing so, it minimizes the structural impact in terms of local access holes and reinforcements, the complexity of the industrialization and the accessibility for maintenance and operability purposes. All this enables the optimization of the fuselage structure in terms of weight and cost.
- It maximizes the fuel tank cross-section and volume by using compatible solutions, enabling a fuel tank attachment with less space clearance requirement than other kinds of solutions like with rods, lugs and/or fittings. This can contribute to increasing the gravimetric index of the fuel tanks, and thus its performance and efficiency to store the same amount of fuel, i.e. LH2.
- There is no need for a large pit or complex ground support equipment to install and/or remove the fuel tank from the aircraft unpressurized rear fuselage structure. These industrial and maintenance tasks can be feasible by means of standard crane

Other features and advantages of the present invention will become apparent from the following detailed description of an illustrative embodiment and not limiting its purpose in connection with the accompanying figures.

### Description of figures

Figure 1 shows a side view of an aircraft fuselage section comprising a fuel tank in the unpressurized rear fuselage of an aircraft.
Figure 2 shows a cross-sectional view of the aircraft fuselage section comprising a fuel tank of the invention.
Figure 3 shows a cross-sectional view of the aircraft fuselage section comprising a fuel tank of the invention when the fuel tank is being extracted.
Figure 4 shows an aircraft with an aircraft fuselage section comprising a fuel tank of the invention.

### Detailed description of the invention

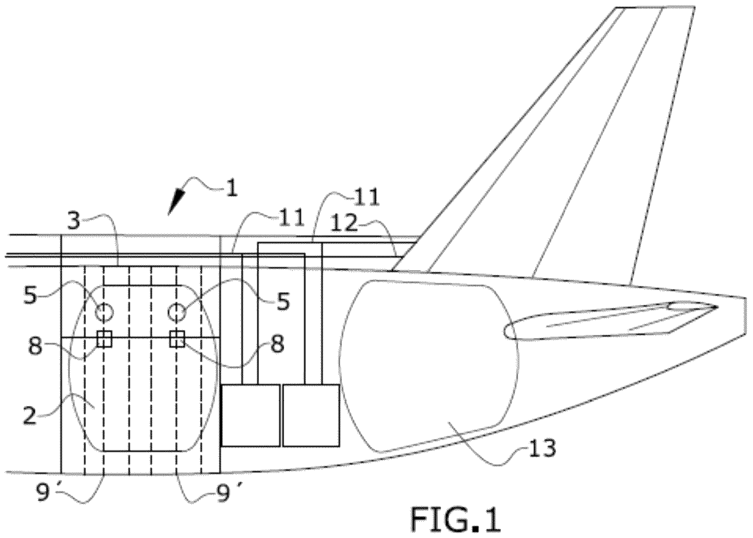

Figures 1, 2 and 3 show an embodiment of the aircraft fuselage section 1 comprising a fuel tank 2 of the invention. As it can be seen in those figures, the aircraft fuselage section 1 is installed in the unpressurized rear fuselage of the aircraft 100 and comprises these components:
- a fuel tank 2 and
- a top removable structural panel 3.

The fuel tank 2 is attached to the top removable structural panel 3 by means of attachment joints 4 attached to the panel 3 at internal anchor points 5.

In an embodiment, the fuel tank 2 is only attached to the top removable structural panel 3.

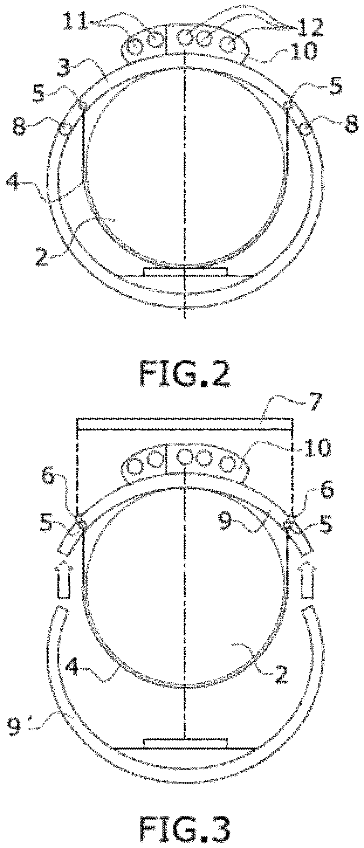

The attachment joints 4 are continuous attachment joints, such as band-clamps or straps on a portion of which the liquid hydrogen cryotank rests. Figures 2 and 3 show straps as continuous attachment joints 4. Continuous attachment joints 4 (such as the straps of Figures 2 and 3) divide the load up along their contact surface with the fuel tank 2; however, discrete attachment joints only contact the fuel tank 2 at a number of points.

The top removable structural panel 3 comprises external anchor points 6 placed in the areas of the panel 3 where the internal anchor points 5 for the attachments joints 4 are located, such that the external anchor points 6 are configured to be connected to external hoisting means 7, such as an external crane (see Fig.3).

The structural continuity between the top removable panel 3 and the rest of the aircraft fuselage section 1 is achieved through frame joints 8, which are suitable for disconnecting frame portions 9 of the top removable structural panel 3 from the frames 9' of the rest of the aircraft fuselage section 1.

The stringers in the aircraft fuselage section 1 are connected to the stringers of the rest of the fuselage. The stringers of the top removable structural panel 3 are connected to the stringers of the aircraft fuselage section 1.

The skin of the aircraft fuselage section 1 is connected to the skin of the rest of the aircraft fuselage, for example by riveting. The skin of the top removable structural panel 3 is connected to the skin of the aircraft fuselage section 1, for example by riveting or screwing.

The frames 9 of the top removable structural panel 3 and the frames 9' of the rest of the aircraft fuselage section 1 can be highly loaded frames, connected by the frame joints 8. Highly loaded frames are those frames that are subjected to the weight of the fuel tank 2.

The top removable structural panel 3 is advantageous over other options, such as side removable panels or bottom removable panels, as it avoids the need of more complex installation and dismantling operations and Ground Support Equipments.

In an embodiment, the aircraft fuselage section 1 additionally comprises a top fairing 10 over the top removable structural panel 3, the top fairing 10 being equipped with hydrogen systems 11 and/or non-hydrogen systems 12 that comprise corresponding interfaces and connections at both sides of the top fairing 10.

The hydrogen systems 11 can be a hydrogen feed line and a hydrogen vent line. The non-hydrogen systems 12 can be electrical, hydraulic, pneumatic, etc. The hydrogen systems 11 and the non-hydrogen systems 12 are routed through the top fairing 10 over the aircraft fuselage (as it can be seen in Figs. 2 and 3). The equipped top fairing 10 is provided with interfaces and physical couplings for the hydrogen systems 11 and the non-hydrogen systems 12 at both sides of the top fairing 10, in order to enable the installation and removal of the top removable structural panel 3 with the fuel tank 2.

The fuel tank can be a liquid hydrogen cryotank. The liquid hydrogen cryotank can be made of different materials, such as composite materials or metal (for instance, a metallic aluminium alloy). However, the composite cryotank is advantageous, as it offers a significant weight reduction.

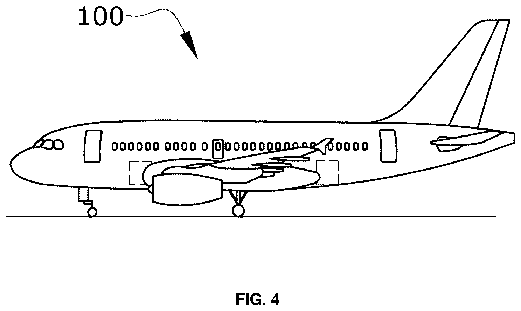

Fig. 4 shows a representation of an aircraft 100 comprising an aircraft fuselage section 1 with a fuel tank.

In Fig. 1 it can be seen that the aircraft fuselage section 1 can lodge (apart from the front fuel tank 2 so far described), an additional rear fuel tank. When the fuel tank 2 is a liquid hydrogen cryotank, the additional rear fuel tank is also a rear liquid hydrogen cryotank 13, forming a caudal tandem cryotank configuration.

In Figs. 2 and 3 it can be seen that the fuel tank 2 can be installed on a protection cradle on the fuselage floor.

The configuration of the aircraft fuselage section 1 comprising a fuel tank 2 improves its installation and removal.

The method for extracting a fuel tank 2 from an aircraft fuselage section 1 of the invention from an aircraft 100 comprises the following steps:
- the external anchor points 6 are connected to external hoisting means 7,
- the frame joints 8 are disconnected, separating the top removable structural panel 3 from the rest of the aircraft fuselage section 1, and
- the external hoisting means 7 raise the top removable structural panel 3 with the fuel tank 2 out of the rest of the aircraft fuselage section 1.

The method for extracting a fuel tank 2 from an aircraft fuselage section 1 with a top fairing 10 of the invention from an aircraft 100 comprises the following steps:
- the external anchor points 6 are connected to external hoisting means 7,
- the frame joints 8 are disconnected, separating the top removable structural panel 3 from the rest of the aircraft fuselage section 1,
- the hydrogen systems 11 and non-hydrogen systems 12 in the top fairing 10 are disconnected, and
- the external hoisting means 7 raise the top removable structural panel 3 with the fuel tank 2 out of the rest of the aircraft fuselage section 1.Although the present invention has been fully described in connection with preferred embodiments, it is apparent that modifications can be made within the scope, not considering this as limited by these embodiments, but by the content of the following claims.

## Claims

1. Aircraft fuselage section (1) comprising a fuel tank (2), the aircraft fuselage section (1) further comprising a top removable structural panel (3), wherein:
- the fuel tank (2) is attached to the top removable structural panel (3) by means of attachment joints (4) attached to the panel (3) at internal anchor points (5),
- the top removable structural panel (3) comprises external anchor points (6) placed in the areas of the panel (3) where the internal anchor points (5) are located, the external anchor points (6) being configured to be connected to external hoisting means (7), and
- the structural continuity between the top removable structural panel (3) and the rest of the aircraft fuselage section (1) is achieved through frame joints (8), the frame joints (8) being suitable for disconnecting frame portions of the top removable structural panel (3) from frames of the rest of the aircraft fuselage section (1).

2. Aircraft fuselage section (1) comprising a fuel tank (2) according to claim 1, wherein the fuel tank (2) is only attached to the top removable structural panel (3).

3. Aircraft fuselage section (1) comprising a fuel tank (2) according to claim 1 or 2, wherein the frames of the top removable structural panel (3) and the frames of the rest of the aircraft fuselage section (1) are highly loaded frames.

4. Aircraft fuselage section (1) comprising a fuel tank (2) according to any of the previous claims, wherein the attachment joints (4) are continuous attachment joints.

5. Aircraft fuselage section (1) comprising a fuel tank (2) according to claim 4, wherein the continuous attachment joints are band-clamps.

6. Aircraft fuselage section (1) comprising a fuel tank (2) according to claim 4, wherein the continuous attachment joints are straps on a portion of which the fuel tank (2) rests.

7. Aircraft fuselage section (1) comprising a fuel tank (2) according to any of claims 1 to 3, wherein the attachment joints (4) are discrete attachment joints.

8. Aircraft fuselage section (1) comprising a fuel tank (2) according to any of the previous claims, wherein the fuel tank (2) is installed in the unpressurized rear fuselage of the aircraft.

9. Aircraft fuselage section (1) comprising a fuel tank (2) according to any of the previous claims, wherein the external anchor points (6) are removable.

10. Aircraft fuselage section (1) comprising a fuel tank (2) according to any of the previous claims, that additionally comprises a top fairing (10) over the top removable structural panel (3), the top fairing (10) being equipped with hydrogen systems (11) and/or non-hydrogen systems (12) that comprise corresponding interfaces and connections at both sides of the top fairing (10).

11. Aircraft (100) comprising an aircraft fuselage section (1) comprising a fuel tank (2) according to any of the previous claims.

12. Aircraft (100) according to claim 11, wherein the aircraft fuselage section (1) comprises an additional rear liquid hydrogen cryotank (13).

13. Method for extracting a fuel tank (2) from an aircraft fuselage section (1) of claims 1 to 9, the method comprising the following steps:
- the external anchor points (6) are connected to external hoisting means (7),
- the frame joints (8) are disconnected, separating the top removable structural panel (3) from the rest of the aircraft fuselage section (1), and
- the external hoisting means (7) raise the top removable structural panel (3) with the fuel tank (2) out of the rest of the aircraft fuselage section (1).

14. Method for extracting a fuel tank (2) from an aircraft fuselage section (1) of claim 10, the method comprising the following steps:
- the external anchor points (6) are connected to external hoisting means (7),
- the frame joints (8) are disconnected, separating the top removable structural panel (3) from the rest of the aircraft fuselage section (1),
- the hydrogen systems (11) and non-hydrogen systems (12) in the top fairing (10) are disconnected, and
- the external hoisting means (7) raise the top removable structural panel (3) with the fuel tank (2) out of the rest of the aircraft fuselage section (1).

## Patentansprüche

1. Flugzeugrumpfabschnitt (1), der einen Treibstofftank (2) umfasst, wobei der Flugzeugrumpfabschnitt (1) ferner ein oberes entfernbares Strukturpaneel (3) umfasst, wobei:
- der Treibstofftank (2) an dem oberen abnehmbaren Strukturpaneel (3) mittels Befestigungsverbindungen (4) befestigt ist, die an inneren Ankerpunkten (5) an dem Paneel (3) befestigt sind;
- das obere abnehmbare Strukturpaneel (3) äußere Ankerpunkte (6) umfasst, die in den Bereichen des Paneels (3), in denen sich die inneren Ankerpunkte (5) befinden, angeordnet sind, wobei die äußeren Ankerpunkte (6) ausgelegt sind, mit externen Hebemitteln (7) verbunden zu werden, und
- die strukturelle Kontinuität zwischen dem oberen abnehmbaren Strukturpaneel (3) und dem Rest des Flugzeugrumpfabschnitts (1) durch Rahmenverbindungen (8) erreicht wird, wobei die Rahmenverbindungen (8) geeignet sind, Rahmenabschnitte des oberen abnehmbaren Strukturpaneels (3) von Rahmen des restlichen Flugzeugrumpfabschnitts (1) abzutrennen.

2. Flugzeugrumpfabschnitt (1), der einen Treibstofftank (2) nach Anspruch 1 umfasst, wobei der Treibstofftank (2) nur an dem oberen entfernbaren Strukturpaneel (3) befestigt ist.

3. Flugzeugrumpfabschnitt (1), der einen Treibstofftank (2) nach Anspruch 1 oder 2 umfasst, wobei die Rahmen des oberen entfernbaren Strukturpaneels (3) und die Rahmen des Rests des Flugzeugrumpfabschnitts (1) hochbelastete Rahmen sind.

4. Flugzeugrumpfabschnitt (1), der einen Treibstofftank (2) nach einem der vorhergehenden Ansprüche umfasst, wobei die Befestigungsverbindungen (4) durchgehende Befestigungsverbindungen sind.

5. Flugzeugrumpfabschnitt (1), der einen Treibstofftank (2) nach Anspruch 4 umfasst, wobei die durchgehenden Befestigungsverbindungen Bandklammern sind.

6. Flugzeugrumpfabschnitt (1), der einen Treibstofftank (2) nach Anspruch 4 umfasst, wobei die durchgehenden Befestigungsverbindungen Gurte sind, auf einem Abschnitt derer der Treibstofftank (2) aufliegt.

7. Flugzeugrumpfabschnitt (1), der einen Treibstofftank (2) nach einem der Ansprüche 1 bis 3 umfasst, wobei die Befestigungsverbindungen (4) diskrete Befestigungsverbindungen sind.

8. Flugzeugrumpfabschnitt (1), der einen Treibstofftank (2) nach einem der vorhergehenden Ansprüche umfasst, wobei der Treibstofftank (2) in dem drucklosen hinteren Rumpf des Flugzeugs installiert ist.

9. Flugzeugrumpfabschnitt (1), der einen Treibstofftank (2) nach einem der vorhergehenden Ansprüche umfasst, wobei die externen Ankerpunkte (6) entfernbar sind.

10. Flugzeugrumpfabschnitt (1), der einen Treibstofftank (2) nach einem der vorhergehenden Ansprüche umfasst, der zusätzlich eine obere Verkleidung (10) über dem oberen entfernbaren Strukturpaneel (3) umfasst, wobei die obere Verkleidung (10) mit Wasserstoffsystemen (11) und/oder nicht-Wasserstoffsystemen (12) ausgestattet ist, die entsprechende Schnittstellen und Verbindungen an beiden Seiten der oberen Verkleidung (10) umfassen.

11. Flugzeug (100), das einen Flugzeugrumpfabschnitt (1) umfasst, der einen Treibstofftank (2) nach einem der vorhergehenden Ansprüche umfasst.

12. Flugzeug (100) nach Anspruch 11, wobei der Flugzeugrumpfabschnitt (1) einen zusätzlichen hinteren Flüssigwasserstoff-Kryotank (13) umfasst.

13. Verfahren zum Entnehmen eines Treibstofftanks (2) aus einem Flugzeugrumpfabschnitt (1) nach den Ansprüchen 1 bis 9, wobei das Verfahren die folgenden Schritte umfasst:
- die äußeren Ankerpunkte (6) werden mit externen Hebemitteln (7) verbunden,
- die Rahmenverbindungen (8) werden abgetrennt, wodurch das obere abnehmbare Strukturpaneel (3) vom Rest des Flugzeugrumpfabschnitts (1) getrennt wird, und
- die äußeren Hebemittel (7) heben das obere abnehmbare Strukturpaneel (3) mit dem Treibstofftank (2) aus dem Rest des Flugzeugrumpfabschnitts (1) heraus.

14. Verfahren zum Entnehmen eines Treibstofftanks (2) aus einem Flugzeugrumpfabschnitt (1) nach Anspruch 10, wobei das Verfahren die folgenden Schritte umfasst:
- die äußeren Ankerpunkte (6) werden mit externen Hebemitteln (7) verbunden,
- die Rahmenverbindungen (8) werden abgetrennt, wodurch das obere abnehmbare Strukturpaneel (3) vom Rest des Flugzeugrumpfabschnitts (1) getrennt wird,
- die Wasserstoffsysteme (11) und nicht-Wasserstoffsysteme (12) in der oberen Verkleidung (10) werden abgetrennt und
- die äußeren Hebemittel (7) heben das obere abnehmbare Strukturpaneel (3) mit dem Treibstofftank (2) aus dem Rest des Flugzeugrumpfabschnitts (1) heraus.

## Revendications

1. Section de fuselage d'aéronef (1) comprenant un réservoir de carburant (2), la section de fuselage d'aéronef (1) comprenant en outre un panneau structural amovible supérieur (3),
- le réservoir de carburant (2) étant fixé au panneau structural amovible supérieur (3) au moyen de joints de fixation (4) fixés au panneau (3) au niveau de points d'ancrage internes (5),
- le panneau structural amovible supérieur (3) comportant des points d'ancrage externes (6) placés dans les zones du panneau (3) où se trouvent les points d'ancrage internes (5), les points d'ancrage externes (6) étant configurés pour être reliés à des moyens de levage externes (7), et
- la continuité structurale entre le panneau structural amovible supérieur (3) et le reste de la section de fuselage d'aéronef (1) étant réalisée par des joints de cadre (8), les joints de cadre (8) étant adaptés pour déconnecter des parties de cadre du panneau structural amovible supérieur (3) des cadres du reste de la section de fuselage d'aéronef (1).

2. Section de fuselage d'aéronef (1) comprenant un réservoir de carburant (2) selon la revendication 1, le réservoir de carburant (2) étant fixé uniquement au panneau structural amovible supérieur (3).

3. Section de fuselage d'aéronef (1) comprenant un réservoir de carburant (2) selon la revendication 1 ou 2, les cadres du panneau structural amovible supérieur (3) et les cadres du reste de la section de fuselage d'aéronef (1) étant des cadres fortement chargés.

4. Section de fuselage d'aéronef (1) comprenant un réservoir de carburant (2) selon l'une quelconque des revendications précédentes, les joints de fixation (4) étant des joints de fixation continus.

5. Section de fuselage d'aéronef (1) comprenant un réservoir de carburant (2) selon la revendication 4, les joints de fixation continus étant des colliers de serrage.

6. Section de fuselage d'aéronef (1) comprenant un réservoir de carburant (2) selon la revendication 4, les joints de fixation continus étant des sangles sur une partie desquelles repose le réservoir de carburant (2).

7. Section de fuselage d'aéronef (1) comprenant un réservoir de carburant (2) selon l'une quelconque des revendications 1 à 3, les joints de fixation (4) étant des joints de fixation discrets.

8. Section de fuselage d'aéronef (1) comprenant un réservoir de carburant (2) selon l'une quelconque des revendications précédentes, le réservoir de carburant (2) étant installé dans le fuselage arrière non pressurisé de l'aéronef.

9. Section de fuselage d'aéronef (1) comprenant un réservoir de carburant (2) selon l'une quelconque des revendications précédentes, les points d'ancrage externes (6) étant amovibles.

10. Section de fuselage d'aéronef (1) comprenant un réservoir de carburant (2) selon l'une quelconque des revendications précédentes, qui comprend en outre un carénage supérieur (10) au-dessus du panneau structural amovible supérieur (3), le carénage supérieur (10) étant équipé de systèmes à hydrogène (11) et/ou de systèmes autres qu'à hydrogène (12) qui comprennent des interfaces et des connexions correspondantes des deux côtés du carénage supérieur (10).

11. Aéronef (100) comprenant une section de fuselage d'aéronef (1) comprenant un réservoir de carburant (2) selon l'une quelconque des revendications précédentes.

12. Aéronef (100) selon la revendication 11, la section de fuselage d'aéronef (1) comprenant un cryoréservoir arrière supplémentaire d'hydrogène liquide (13).

13. Procédé d'extraction d'un réservoir de carburant (2) d'une section de fuselage d'aéronef (1) selon les revendications 1 à 9, le procédé comprenant les étapes suivantes :
- les points d'ancrage externes (6) sont reliés à des moyens de levage externes (7),
- les joints de cadre (8) sont déconnectés, séparant le panneau structural amovible supérieur (3) du reste de la section de fuselage d'aéronef (1), et
- les moyens de levage externes (7) soulèvent le panneau structural amovible supérieur (3) avec le réservoir de carburant (2) hors du reste de la section de fuselage d'aéronef (1).

14. Procédé d'extraction d'un réservoir de carburant (2) d'une section de fuselage d'aéronef (1) selon la revendication 10, le procédé comprenant les étapes suivantes :
- les points d'ancrage externes (6) sont reliés à des moyens de levage externes (7),
- les joints de cadre (8) sont déconnectés, séparant le panneau structural amovible supérieur (3) du reste de la section de fuselage d'aéronef (1),
- les systèmes à hydrogène (11) et systèmes autres qu'à hydrogène (12) dans le carénage supérieur (10) sont déconnectés, et
- les moyens de levage externes (7) soulèvent le panneau structural amovible supérieur (3) avec le réservoir de carburant (2) hors du reste de la section de fuselage d'aéronef (1).
